# EUROPEAN PATENT SPECIFICATION

(11) **EP 3 225 863 B1**
(45) Date of publication and mention of the grant of the patent: **13.06.2018**
(21) Application number: 16162566.0
(22) Date of filing: 29.03.2016
(51) Int. Cl.: F16C 33/66, F16C 33/38, F16C 19/06

(54) **BALL BEARING HAVING A WINDOW CAGE OF WHICH THE POCKETS INCLUDE GROOVES FOR THE STORAGE OF LUBRICANT**
KUGELLAGER MIT EINEM FENSTERKÄFIG DESSEN TASCHEN ZUR SPEICHERUNG VON SCHMIERMITTEL NUTEN AUFWEISEN
ROULEMENT À BILLES AVEC UNE CAGE À FENÊTRES LES ALVÉOLES DE LAQUELLE ONT DES RAINURES POUR LE STOCKAGE DE LUBRIFIANT

(43) Date of publication of application: 04.10.2017
(73) Proprietor: Hiwin Technologies Corp., Taichung 40852 (TW)
(72) Inventor: CHANG, Che-Kang, 40852 Taichung (TW); LIU, Chia-Min, 40852 Taichung (TW)
(74) Representative: Lang, Christian

(56) References cited:
- EP-A1- 2 610 510
- EP-A2- 2 653 741
- CN-U- 203 308 929
- DE-A1-102011 077 935
- GB-A- 817 744
- GB-A- 1 186 856
- JP-A- 2004 211 862
- US-A- 3 839 531

## Description

### BACKGROUND OF THE INVENTION

### 1. Field of the Invention

The present invention relates to a rotatable transmission component, and more particularly to a bearing having a retainer.

### 2. Description of the Prior Art

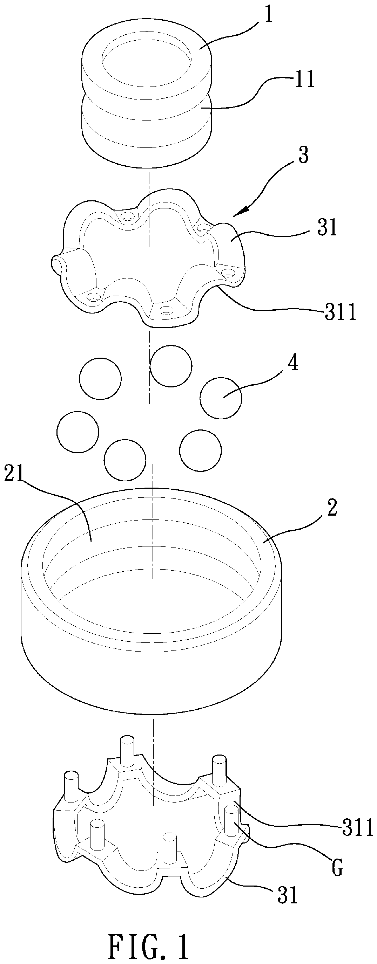

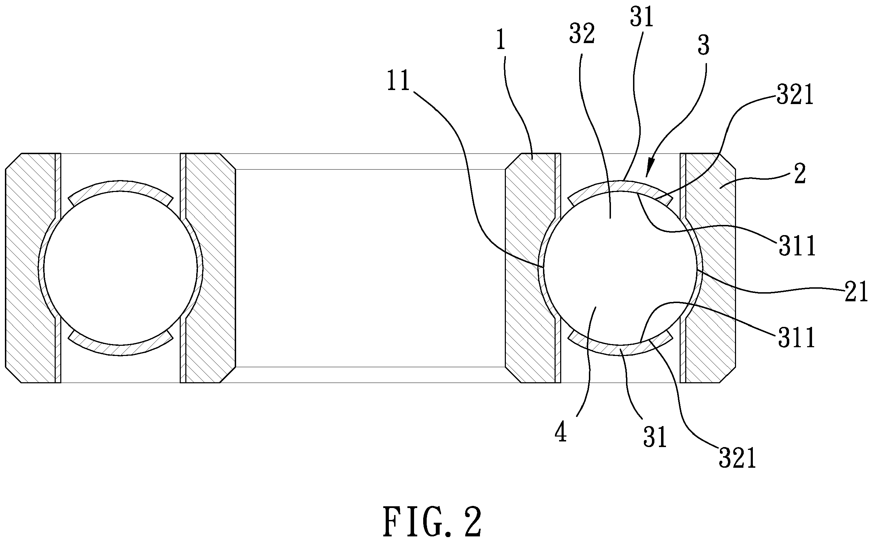

As shown in FIG. 1 and FIG. 2, a conventional bearing comprises an inner ring (1), an outer ring (2), a retainer (3), and a plurality of balls (4). The outer ring (2) is disposed at a distance from the inner ring (1) to be around the inner ring (1). The retainer (3) is disposed between the inner ring (1) and the outer ring (2). The retainer (3) is composed of two annular plates (31) having a plurality of recesses (311). The two annular plates (31) are connected and fixed by a plurality of fixing members (G). The recesses (311) of the two annular plates (31) form a plurality of accommodation holes (32) to accommodate the balls (4). The balls (4) are rotatable in the accommodation holes (32) of the retainer (3) and in contact with the inner ring (1) and the outer ring (2). Each accommodation hole (32) has a retaining surface (321) corresponding to the contour of the ball (4), which is unable to store lubricant between the retaining surface (321) and the ball (4). During the running of the bearing, the balls (4) rub against a rolling groove (11) of the inner ring (1) and a rolling trough (21) of the outer ring (2). The friction is great and the lubrication is not good to bring friction heat. This will lower the precision and the service life of the bearing greatly. Accordingly, the inventor of the present invention has devoted himself based on his many years of practical experiences to solve these problems.

A bearing with the features of the preamble of claim 1 is known from document EP 2 610 510 A1. The bearing has an annular retainer with a plurality of holes to accommodate balls. The holes are formed by corresponding U-shaped portions.

Document DE 10 2011 077 935 A1 describes a retainer for a ball bearing, wherein each hole for accommodating a ball is provided with a shallow annular lubricant storage groove which has a maximum depth between 0.25 mm and 0.60 mm as storage for lubricating grease.

### SUMMARY OF THE INVENTION

The primary object of the present invention is to solve the aforesaid problems and to provide a bearing having a retainer with a lubricant storage structure.

In order to achieve the aforesaid object, the bearing having a retainer of the present invention comprises an inner ring, an outer ring, a plurality of balls, and an annular retainer. The inner ring has a rolling groove thereon. The outer ring is fitted on the inner ring. The outer ring has a rolling trough therein. The rolling trough corresponds in position to the rolling groove. The rolling groove and the rolling trough form a load route. The annular retainer has a plurality of interlaced accommodation holes to accommodate the balls. Each accommodation hole is formed by a pair of corresponding U-shaped half retaining portions. Each half retaining portion has a U-shaped opening. The pair of half retaining portions have corresponding U-shaped half oil grooves. The two half oil grooves form an oil groove. A lubricant storage space is formed between each ball and the oil groove. The half oil grooves are one quarter of a circle, and the circle has a diameter of 0.5-2 mm. Preferably, each half retaining portion has two half retaining surfaces relative to each accommodation hole. One end of the retaining surface is connected with the half oil groove, and another end of the retaining surface extends radially and is reduced. The two half retaining surfaces of each accommodation hole have a concave, <-like shape so as to retain a corresponding one of the balls in the accommodation hole.

Preferably, the oil groove is semicircular.

Thereby, the openings of the half retaining portions of the annular retainer of the present invention are interlaced to disturb the flow of the lubricant in the accommodation holes of the retainer. In addition, through the design of the half oil groove, the lubricant can be kept in the storage space formed between each ball and the half oil groove for the ball to be lubricated adequately.

### BRIEF DESCRIPTION OF THE DRAWINGS

FIG. 1 is an exploded view of a conventional bearing having a retainer;
FIG. 2 is a sectional view of FIG. 1;
FIG. 3 is an exploded view of a bearing having a retainer in accordance with a preferred embodiment of the present invention;
FIG. 4 is a perspective view of FIG. 3; and
FIG. 5 is a sectional view of FIG. 3;

### DETAILED DESCRIPTION OF THE PREFERRED EMBODIMENTS

Embodiments of the present invention will now be described, by way of example only, with reference to the accompanying drawings.

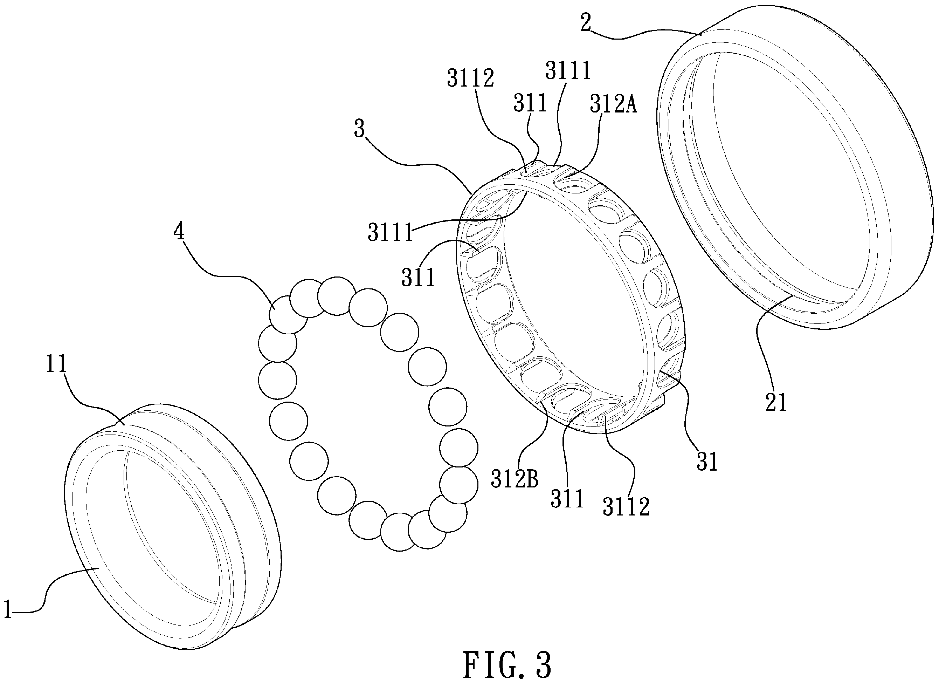

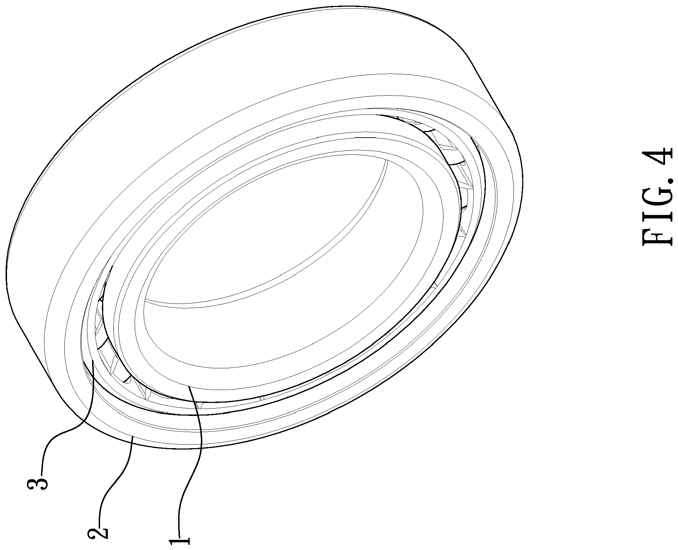

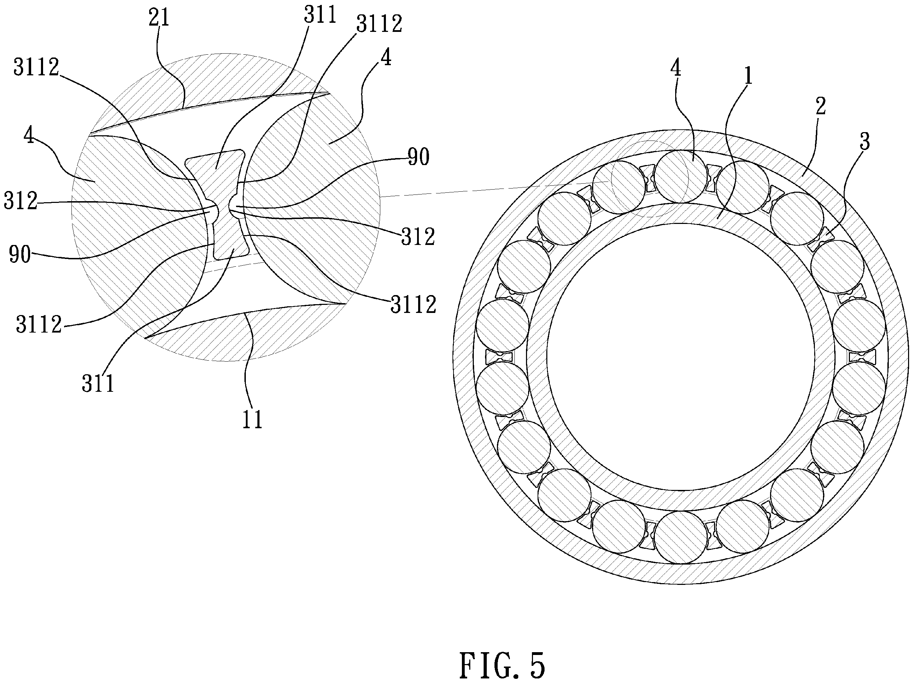

As shown in FIG. 3 through FIG. 5, a bearing having a retainer in accordance with a preferred embodiment of the present invention comprises an inner ring (1), an outer ring (2), a plurality of balls (4), and an annular retainer (3). The inner ring (1) has a rolling groove (11) thereon. The outer ring (2) is fitted on the inner ring (1) and has a rolling trough (21) therein. The rolling trough (21) corresponds in position to the rolling groove (11). The rolling groove (11) and the rolling trough (21) form a load route. The annular retainer (3) has a plurality of interlaced accommodation holes (31) to accommodate the balls (4). Each accommodation hole (31) is formed by a pair of corresponding U-shaped half retaining portions (311). Each half retaining portion (311) has a U-shaped opening (3111). As shown in FIG. 3, the pair of half retaining portions (311) have corresponding U-shaped half oil groove (312A, 312B). In this embodiment, the half oil grooves (312A, 312B) are one quarter of a circle. The circle has a diameter of 0.5-2mm. The definition of this range makes the half retaining portions (311) have a better strength, preventing the half retaining portions (311) from being deformed or broken due to compression when the balls (4) are running in the accommodation holes (31). The two half oil grooves (312A, 312B) form an oil groove (312). In this embodiment, the oil groove (312) is semicircular. A lubricant storage space (90) is formed between each ball (4) and the oil groove (312). Each half retaining portion (311) has two half retaining surfaces (3112) relative to the accommodation hole (31). One end of the retaining surface (3112) is connected with the half oil groove (312A, 312B), and another end of the retaining surface (3112) extends radially and is reduced. The two half retaining surfaces (3112) of each accommodation hole (31) have a concave, <-like shape so as to retain a corresponding one of the balls (4) in the accommodation hole (31).

Although particular embodiments of the present invention have been described in detail for purposes of illustration, various modifications and enhancements may be made without departing from the spirit and scope of the present invention. Accordingly, the present invention is not to be limited except as by the appended claims.

### Prior art

(1) inner ring
(11) rolling groove
(2) outer ring
(21) rolling trough
(3) retainer
(31) annular plate
(311) recess
(32) accommodation hole
(321) retaining surface
(4) ball
(G) fixing member

The present invention
(1) inner ring
(11) rolling groove
(2) outer ring
(21) rolling trough
(3) retainer
(31) accommodation hole
(311) half retaining portion
(3111) opening
(3112) half retaining surface
(312) oil groove
(312A, 312B) half oil groove
(4) ball
(90) storage space

## Claims

1. A bearing having a retainer, comprising an inner ring (1), an outer ring (2), a plurality of balls (4), and an annular retainer (3), the inner ring (1) having a rolling groove (11) thereon, the outer ring (2) being fitted on the inner ring (1), the outer ring (2) having a rolling trough (21) therein, the rolling trough (21) corresponding in position to the rolling groove (11), the rolling groove (11) and the rolling trough (21) forming a load route, the annular retainer (3) having a plurality of interlaced accommodation holes (31) to accommodate the balls (4), each accommodation hole (31) being formed by a pair of corresponding U-shaped half retaining portions (311), each half retaining portion (311) having a U-shaped opening (3111), the pair of half retaining portions (311) having corresponding U-shaped half oil grooves (312A, 312B), the two half oil grooves (312A, 312B) forming an oil groove (312), a lubricant storage space (90) being formed between each ball (4) and the oil groove (312) **characterized in that** the half oil grooves (312A, 312B) are one quarter of a circle, and the circle has a diameter of 0.5-2 mm.

2. The bearing having a retainer as claimed in claim 1, wherein each half retaining portion (311) has two half retaining surfaces (3112) relative to each accommodation hole (31), one end of the retaining surface (3112) is connected with the half oil groove (312A, 312B), and another end of the retaining surface (3112) extends radially and is reduced, the two half retaining surfaces (3112) of each accommodation hole (31) has a concave, <-like shape so as to retain a corresponding one of the balls (4) in the accommodation hole (31).

3. The bearing having a retainer as claimed in claim 1, wherein the oil groove (312) is semicircular.

## Patentansprüche

1. Lager mit einem Käfig umfassend einen inneren Ring (1), einen äußeren Ring (2), eine Vielzahl an Kugeln (4) und einen ringförmigen Halter (3), wobei der innere Ring (1) eine Rollnut (11) darauf aufweist, wobei der äußere Ring (2) auf den inneren Ring (1) angepasst ist, wobei der äußere Ring (2) eine Rollrinne (21) darin aufweist, wobei die Rollrinne (21) in ihrer Position der Rollnut (11) entspricht, wobei die Rollnut (11) und die Rollrinne (21) einen Lastpfad bilden, wobei der ringförmige Halter (3) eine Vielzahl von verschränkten Aufnahmeöffnungen (31) aufweist, um die Kugeln (4) aufzunehmen, wobei jede Aufnahmeöffnung (31) aus einem Paar entsprechender U-förmiger halber Halteabschnitte (311) gebildet ist, wobei jeder halbe Halteabschnitt (311) eine U-förmige Öffnung (3111) aufweist, wobei das Paar halber Halteabschnitte (311) korrespondierende U-förmige halbe Ölnuten (312A, 312B) aufweist,
wobei die zwei halben Ölnuten (312A, 312B) eine Ölnut (312) bilden, wobei ein Schmiermittel-Speicherraum (90) zwischen jeder Kugel (4) und der Ölnut (312) gebildet ist,
**gekennzeichnet dadurch, dass** die halben Ölnuten (312A, 312B) ein Viertel eines Kreises ausmachen, wobei der Kreis einen Durchmesser von 0,5-2 mm hat.

2. Lager mit einem Käfig nach Anspruch 1, bei welchem jeder halbe Halteabschnitt (311) zwei halbe Halteflächen (3112) relativ zu jeder Aufnahmeöffnung (31) aufweist, wobei ein Ende der Haltefläche (3112) mit der halben Ölnut (312A, 312B) verbunden ist und das andere Ende der Haltefläche (3112) sich radial erstreckt und reduziert ist, wobei die zwei halben Halteflächen (3112) jeder Aufnahmeöffnung (31) eine konkave, < - ähnliche Form aufweisen, um eine Entsprechende der Kugeln (4) in der Aufnahmeöffnung (31) zu halten.

3. Lager mit einem Käfig nach Anspruch 1, bei welchem die Ölnut (312) halbkreisförmig ist.

## Revendications

1. Roulement ayant une cage, comprenant une bague interne (1), une bague externe (2), une pluralité de billes (4), et une cage annulaire (3), la bague interne (1) ayant une rainure de roulement (11) sur celle-ci, la bague externe (2) étant montée sur la bague interne (1), la bague externe (2) ayant un creux de roulement (21) dans celle-ci, la position du creux de roulement (21) correspondant à la position de la rainure de roulement (11), la rainure de roulement (11) et le creux de roulement (21) formant un trajet de charge, la cage annulaire (3) ayant une pluralité d'orifices de logement entrelacés (31) pour loger les billes (4), chaque orifice de logement (31) étant formé par une paire de demi-parties de retenue en forme de U correspondantes (331), chaque demi-partie de retenue (311) ayant une ouverture en forme de U (3111), la paire de demi-parties de retenue (311) ayant des demi-rainures de graissage en forme de U correspondantes (312A, 312B),
les deux demi-rainures de graissage (312A, 312B) formant une rainure de graissage (312), un espace de stockage de lubrifiant (90) étant formé entre chaque bille (4) et la rainure de graissage (312),
charactérisé en ce que les demi-rainures de graissage (312A, 312B) sont un quart d'un cercle, et le cercle possède un diamètre de 0,5 à 2 mm.

2. Roulement ayant une cage selon la revendication 1, dans lequel chaque demi-partie de retenue (311) présente deux demi-surfaces de retenue (3112) par rapport à chaque orifice de logement (31), une extrémité de la surface de retenue (3112) est reliée à la demi-rainure de graissage (312A, 312B), et une autre extrémité de la surface de retenue (3112) se prolonge radialement et est réduite, les deux demi-surfaces de retenue (3112) de chaque orifice de logement (31) ont une concave forme de type < afin de retenir une des billes (4) correspondante dans l'orifice de logement (31).

3. Roulement ayant une cage selon la revendication 1, dans lequel la rainure de graissage (312) est semi-circulaire.
